# EUROPEAN PATENT SPECIFICATION

(11) **EP 2 250 846 B1**
(45) Date of publication and mention of the grant of the patent: **01.11.2017**
(21) Application number: 09708577.3
(22) Date of filing: 05.02.2009
(51) Int. Cl.: H04W 8/08, H04W 8/10, H04W 28/16, H04W 60/00, H04W 80/04

(54) **MOBILE IP MULTIPLE REGISTRATIONS AND PCC INTERACTIONS**
MOBIL-IP-MEHRFACHREGISTRATIONEN UND PCC-WECHSELWIRKUNGEN
ENREGISTREMENTS MULTIPLES D'IP MOBILE ET INTERACTIONS PCC

(30) Priority: 06.02.2008 US 26637 P; 04.02.2009 US 365615
(43) Date of publication of application: 17.11.2010
(73) Proprietor: QUALCOMM Incorporated, San Diego, CA 92121 (US)
(72) Inventor: GIARETTA, Gerardo, San Diego California 92121 (US); WANG, Jun, San Diego California 92121 (US); AHMAVAARA, Kalle, I., San Diego California 92121 (US); CASACCIA, Lorenzo, San Diego California 92121 (US); MAHENDRAN, Arungundram, C., San Diego California 92121 (US); TSIRTSIS, Georgios, San Diego California 92121 (US)
(74) Representative: Heselberger, Johannes
(86) International application number: PCT/US2009/033151
(87) International publication number: WO 2009/100177

(56) References cited:
- WO-A-2007/082587
- US-A1- 2005 165 917
- US-A1- 2005 226 180
- US-A1- 2006 129 630
- US-A1- 2007 253 371

## Description

### FIELD OF INVENTION

The exemplary and non-limiting aspects described herein relate generally to wireless communications systems, methods, computer program products and devices, and more specifically to techniques for policy and charging rules and enforcement for multiple mobile IP sessions.

### BACKGROUND

Wireless communication systems are widely deployed to provide various types of communication content such as voice, data, and so on. These systems may be multiple-access systems capable of supporting communication with multiple users by sharing the available system resources (e.g., bandwidth and transmit power). Examples of such multiple-access systems include code division multiple access (CDMA) systems, time division multiple access (TDMA) systems, frequency division multiple access (FDMA) systems, and orthogonal frequency division multiple access (OFDMA) systems.

Generally, a wireless multiple-access communication system can simultaneously support communication for multiple wireless terminals. Each terminal communicates with one or more base stations via transmissions on the forward and reverse links. The forward link (or downlink) refers to the communication link from the base stations to the terminals, and the reverse link (or uplink) refers to the communication link from the terminals to the base stations. This communication link may be established via a single-in-single-out, multiple-in-signal-out or a multiple-in-multiple-out (MIMO) system.

Universal Mobile Telecommunications System (UMTS) is one of the third-generation (3G) cell phone technologies. UTRAN, short for UMTS Terrestrial Radio Access Network, is a collective term for the Node-B's and Radio Network Controllers which make up the UMTS radio access network. This communications network can carry many traffic types from real-time Circuit Switched to IP based Packet Switched. The UTRAN allows connectivity between the UE (user equipment) and the core network. The UTRAN contains the base stations, which are called Node Bs, and Radio Network Controllers (RNC). The RNC provides control functionalities for one or more Node Bs. A Node B and an RNC can be the same device, although typical implementations have a separate RNC located in a central office serving multiple Node B's. Despite the fact that they do not have to be physically separated, there is a logical interface between them known as the Iub. The RNC and its corresponding Node Bs are called the Radio Network Subsystem (RNS). There can be more than one RNS present in an UTRAN.

3GPP LTE (Long Term Evolution) is the name given to a project within the Third Generation Partnership Project (3GPP) to improve the UMTS mobile phone standard to cope with future requirements. Goals include improving efficiency, lowering costs, improving services, making use of new spectrum opportunities, and better integration with other open standards. The LTE system is described in the Evolved UTRA (EUTRA) and Evolved UTRAN (EUTRAN) series of specifications.

Semi-persistent scheduling (SPS) is a set of techniques for efficiently assigning resources for periodic traffic in a wireless communication system to support resource assignment with as little overhead as possible in order to improve system capacity.

Mobile Internet Protocol (Mobile IP or MIP) is a communication protocol that enables transparent routing of data packets to mobile devices in a wireless communication system. Under the Mobile IP protocol, a device can register with a home agent (HA), through which the device obtains a "home" IP address. The home address of the device can then be utilized to route data packets to and/or from the device regardless of the location of the device within a wireless communication network. Conventionally, a mobile device can register with a HA by first discovering a global IP address of the HA and subsequently setting up a security association with the HA based on its discovered IP address. Upon association with the HA, the device can signal updates to the HA relating to the location and/or status of the device. These updates can be utilized by the HA to provide data packets to the device, either directly or indirectly via an access point of a disparate network to which the device has moved.

Document WO 2007/082587 relates to a method of generating and applying a set of policy rules for enforcement by a policy enforcement function at a node of a communication network The method disclosed in D1 comprises, at a service level control function, determining source and destination addressing information for a packet flow to be transported through said node. The addressing information is sent to a policy rules generating function, the policy rules generating function maintaining or having access to service and mobility policies for users of the communication system. At the policy rules generating function, said set of policy rules is generated on the basis of the source and destination addressing information and the appropriate service and mobility policies. The generated set of policy rules is sent to the policy enforcement function, and applied to traffic flows.

Document US 2005/0226180 discloses a system for selectively updating an address of a mobile node capable of roaming in a home communication network and at least one visited network The system including a database for storing at least one data entry which is a mapping between a humanly-readable identifier indicating the mobile node and a machine-readable identifier indicating a physical address at which the mobile node can be reached.

Document US 2006/0129630 relates to data flow handover in communication using mobile internet and to communication using mobile Internet protocol between a Mobile Node and Correspondent Nodes in a network that also comprises a Home Agent for the Mobile Node.

However, complications arise regarding Mobile IP and policy charging control (PCC) interactions. In particular, the entities involved in the mobility management (i.e., mobile node and home agent) are different from the entities involved in quality of service (QoS) and policy (i.e., PCC) management, specifically named PCEF (Policy and Charging Enforcement Function) and PCRF (Policy and Charging Rules Function) respectively. When Mobile IP is not used, there is only one IP address used by the mobile node and this is communicated to the QoS management entities (i.e. PCRF). Based on this address the PCRF establishes the correct QoS in the system. However, when a mobile node performs a MIP registration with the HA, one of the IP address of the mobile node can change and the QoS management entities (i.e., PCRF) are not aware of that as they are not involved. Based on this situation, the PCRF does not know which addresses have been registered by the mobile node. Therefore, the PCRF cannot determine which PCC rules (e.g., IP flows and related policies) need to be sent to the PCEF located at the access gateway for a respective MIP registration.

### SUMMARY

The invention is defined by the independent claims. The following presents a simplified summary in order to provide a basic understanding of some aspects of the disclosed aspects. This summary is not an extensive overview and is intended to neither identify key or critical elements nor delineate the scope of such aspects. Its purpose is to present some concepts of the described features in a simplified form as a prelude to the more detailed description that is presented later.

In accordance with one or more aspects and corresponding disclosure thereof, various aspects are described in connection with coordinating one or multiple Mobile IP registrations of a mobile node with various access gateways with a policy and charging rules function (PCRF). In particular, a home agent (HA), acting as policy and charging enforcement function (PCEF), sends addresses registered as care-of-addresses (CoA) and the home address (HoA) to the PCRF. Thereby, correct associations can be made between a home address of the mobile node and one or more CoA established for correcting sending policy and charging control (PCC) rules from the PCRF to a respective PCEF for the access gateway.

In one aspect, a method is provided for provisioning policy rules for multiple data packet sessions over a wireless communication network to user equipment. A first Internet Protocol (IP) session is established for user equipment (UE) for wireless data packet communications by obtaining an IP address provided by an access policy enforcement function at an access node. A second IP session is instantiated for UE for the wireless data packet communications by binding the IP address of the first session with a home address (HoA) provided by a core policy enforcement function remote to the access node. The establishment of the first and second IP sessions is communicated to a policy rules function. Moreover in an instantiation of the second IP session, the associated CoA is communicated to the policy rule function in order to tie the two sessions In this way the policy rule function can identify the policy enforcement fuction where the Quality of Service (QoS) and Policy Charging Control (PCC) rules need to be enforced.

In another aspect, at least one processor is provided for provisioning policy rules for multiple data packet sessions over a wireless communication network to user equipment. A first module establishes an Internet Protocol (IP) first cession for user equipment (UE) for wireless data packet communications by obtaining an IP address provided by an access policy enforcement function at an access node. A second module instantiates a second IP session for UE for the wireless data packet communications by binding the IP address of the first session with a home address (HoA) provided by a core policy enforcement function remote to the access node. A third module communicated the establishment of the first and second IP sessions to a policy rule function. A fourth module for communicating the associated IP Address of the first session in response to instantiation of the second IP session to the policy rule function. A fifth module ties the first and second sessions to identify the policy enforcement function where the policy rules need to be enforced.

In an additional aspect, a computer program product is provided for provisioning policy rules for multiple data packet sessions over a wireless communication network to user equipment. A computer-readable storage medium comprises a first set of codes for causing a computer to establish a Internet Protocol (IP) first session for user equipment (UE) for wireless data packet communications by obtaining an IP address provided by an access policy enforcement function at an access node. A second set of codes causes the computer to instantiate a second IP session for UE for the wireless data packet communications by binding the IP address of the first session with a home address (HoA) provided by a core policy enforcement function remote to the access node. A third set of codes causes the computer to communicate the establishment of the first and second IP sessions to a policy rule function. A fourth set of codes for causing the computer to communicate the associated IP Address of the first session in response to instantiation of the second IP session to the policy rule function. A fifth set of codes causes the computer to tie the first and second sessions to identify the policy enforcement function where the policy rules need to be enforced.

In another additional aspect, an apparatus is provided for provisioning policy rules for multiple data packet sessions over a wireless communication network to user equipment. Means are provided for establishing a first Internet Protocol (IP) session for user equipment (UE) for wireless data packet communications by obtaining an IP address provided by an access policy enforcement function at an access node. Means are provided for instantiating a second IP session for UE for the wireless data packet communications by binding the IP address of the first session with a home address (HoA) provided by a core policy enforcement function remote to the access node. Means are provided for communicating the establishment of the first and second IP sessions to a policy rule function. Means are provided for communicating the associated IP Address of the first session in response to instantiation of the second IP session to the policy rule function. Means are provided for tying the first and second sessions to identify the policy enforcement function where the policy rules need to be enforced.

In a further aspect, an apparatus is provided for provisioning policy rules for multiple data packet sessions over a wireless communication network to user equipment. An access policy function at in access node establishes a first Internet Protocol (IP) session for user equipment (UE) for wireless data packet communications by obtaining an IP address. A core policy enforcement function remote to the access node instantiates a second IP session for UE for the wireless data packet communications by binding the IP address of the first session with a home address (HoA). A policy rule function receives a communication comprising the establishment of the first and second IP sessions and HoA associated with the first CoA and for tying the two sessions The core policy enforcement function communicated the establishment of the first and second IP sessions to a policy rule function. The core policy enforcement function communicates the associated IP Address of the first session in response to instantiation of the second IP session to the policy rule function. The policy rules function ties the first and second sessions to identify the policy enforcement function where the policy rules need to be enforced.

In yet one aspect, a method is provided for requesting multiple data packet sessions at user equipment over a wireless communications network by communicating filtering information comprising routing information between the user equipment and a network, communicating the filtering information by a core policy enforcement function to a policy rules function together with a home address (HoA) and at least one care of address (CoA), and establishing policy rules at an access policy enforcement function by the policy rules function based on the routing information and provided CoA.

In yet another aspect, at least one processor is provided for requesting multiple data packet sessions at user equipment over a wireless communication network. A first module communicated filtering information comprising routing information between the user equipment and a network. A second module communicated the filtering information by a core policy enforcement function to a policy rules function together with a home address (HoA) and at least one care of address (CoA). A third module establishes policy rules at an access policy enforcement function by the policy rules function based on the routing information and provided CoA.

In yet an additional aspect, a computer program product is provided for requesting multiple data packet sessions at user equipment over a wireless communication network. A computer readable storage medium comprises a first set of codes for causing a computer to communicated filtering information comprising routing information between the user equipment and a network. A second set of codes for causes the computer to communicate the filtering information by a core policy enforcement function to a policy rules function together with a home address (HoA) and at least one care of address (CoA). A third set of codes causes the computer to establish policy rules at an access policy enforcement function by the policy rules function based on the routing information and provided CoA.

In yet another additional aspect, an apparatus is provided for requesting multiple data packet sessions at user equipment over a wireless communication network. Means are provided for communicating filtering information comprising routing information between the user equipment and a network. Means are provided for communicating the filtering information by a core policy enforcement function to a policy rules function together with a home address (HoA) and at least one care of address (CoA). Means are provided for establishing policy rules at an access policy enforcement function by the policy rules function based on the routing information and provided CoA

In yet a further aspect, as apparatus is provided for requesting multiple data packet sessions at user equipment over a wireless communication network. An access node communicated filtering information comprising routing information between user equipment and a network. A core policy enforcement function communicated the filtering information to a policy rules function together with a home address (HoA) and at least one care of address (CoA). The policy rules function establishes policy rules based on the routing information and provided CoA. An access policy enforcement function receives the policy rules.

To the accomplishment of the foregoing and related ends, one or more aspects comprise the features hereinafter fully described and particularly pointed out in the claims. The following description and the annexed drawings set forth in detail certain illustrative aspects and are indicative of but a few of the various ways in which the principles of the aspects may be employed. Other advantages and novel features will become apparent from the following detailed description when considered in conjunction with the drawings and the disclosed aspects are intended to include all such aspects and their equivalent.

### BRIEF DESCRIPTION OF THE DRAWINGS

The features, nature, and advantage of the present disclosure well become more apparent from the detailed description set forth below when taken in conjunction with the drawings in which like reference characters identify correspondingly throughout and wherein:
FIG. 1 depicts a block diagram of a communication system employing a policy enforcement function separated between an access gateway and a core gateway for facilitating mobile IP.
FIG. 2 depicts a block diagram of a policy and charging control (PCC) architecture for client-based mobility.

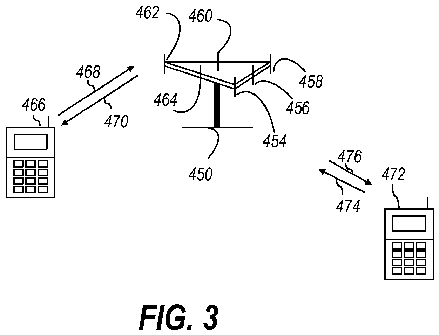

FIG. 3 depicts a diagram of a multiple access wireless communication system according to one aspect for client-based mobility.
FIG. 4 depicts a schematic block diagram of a communication system for supporting client-based mobility.
FIG. 5 depicts a timing diagram of a methodology for PCC architecture and client-based mobility.
FIG. 6 illustrates a block diagram of user equipment and base node having modules for PCC architecture with client-based mobility.

### DETAILED DESCRIPTION

In a wireless communication system having multiple access nodes, a home agent (HA) maintains a home address (HoA) for a mobile node so that an Internet Protocol (IP) session can be established. As the mobile node moves within a coverage area of various access nodes, the mobile node can establish a secure relationship with a local access gateway and thereby register a local IP address, referred to as a care-of-address (CoA), with the HA. Thereby, a network-based mobility protocol such as Proxy Mobile IP (PMIP), General Packet Radio Service (GPRS) Tunneling Protocol (GTP). Mobile IP protocol or the like can be established so that multiple sessions (i.e., serial, parallel) can be conducted. In order for policy and charging control (PCC) can be maintained, the HA informs a policy and charging rules function (PCRF), which in turn can then send the appropriate PCC rules (e.g., IP flows and related policies) to a policy and charging enforcement function (PCEF) for a particular access gateway. The HA can further be aware of filters provided by the mobile node as to what application can run on a particular interface. Thereby, the PCC rules disseminated to the PCEF can reflect this filter information

In another aspect, during the attach to a network and Mobile IP bootstrap phase, two different policy and charging control (PCC) sessions are created for user equipment (UE). In particular, the functionality of PCEF is divided. One session is created between an access policy and charging enforcement function (A-PCEF) and a policy and charging rule function (PCRF), which is bound to a care-of-address (CoA) provided by the A-PCEF during session establishment. Another session is created between a core PCEF (C-PCEF) and the PCRF, which is bound to a Home Address (HoA) provided by the C-PCEF during session establishment. After establishment of the PCC sessions, the PCRF sends PCC rules to the A-PCEF and C-PCEF. Rules sent to A-PCEF have also the CoA information in a flow description whereas rules sent to C-PCEF-have HoA in a flow description. The PCRF ties the two PCC sessions as belonging to the same UE. In one illustrative implementation, a Subscription-ID attribute-value pair (AVP) can be used that carries the identity of the UE. In another implementations the CoA can be used to tie the two PCC sessions; in order to enable that the C-PCEF sends both the HoA and CoA during the session establishment or session update.

It should be appreciated with the benefit of the present disclosure that aspects described herein for the Access-PCEF can be incorporated into a 3GPP Bearer Blinding and Event Reporting Function (BBERF). Similarly, aspects described herein for the Care-PREF can be incorporated into a 3GPP PCEF.

However, situations arise in which the UE can have multiple addresses configured in a specific link with one or more addresses registered as CoA's. The PCRF should know which address provided by the A-PCEF is registered as CoA in order to send the correct PCC rules and flow descriptors when needed. For instance, such a PCC rule and flow descriptors can be needed when an Application Function modifies a receive (Rx) session and tells the PCRF to modify the Quality of Service (QoS) accordingly. The PCRF sends new PCC rules to the C-PCEF bound to that Rx session but also to the CoA bound to that Mobile IP (MIP) registration.

As used in this application, the terms "component", "module", "systems", and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be as component. One or more components may reside within a process and/or thread of execution and a component may be localized on one computer and/or distributed between two or more computers.

The word "exemplary" is used herein to mean serving as an example, instance, or illustration. Any aspect or design described herein as "exemplary" is not necessarily to be construed as preferred or advantageous over other aspects or designs.

Furthermore, the one or more versions may be implemented as a method, apparatus, or article of manufacture using standard programming and/or engineering techniques to produce software, firmware, hardware, or any combination thereof to control a computer to implement the disclosed aspects. The term "article of manufacture" (or alternatively, "computer program product") as used herein is intended to encompass a computer program accessible from any computer-readable device, carrier, or media. For example, computer readable media can include but are not limited to magnetic storage devices (*e.g*., hard disk, floppy disk, magnetic strips...), optical disks (*e.g*., compact disk (CD), digital versatile disk (DVD)...), smart cards, and flash memory devices (*e*.*g*., card, stick). Additionally it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without deporting from the scope of the disclosed aspects.

Various aspect will be presented in terms of systems that may include a number of components, modules, and the life. It is to be understood and appreciated that the various system may include additional components, modules, *etc*, and/or may not include all of the components, modules, *etc.* discussed in connection with the figures. A combination of these approaches may also be used. The various aspects disclosed herein can be performed on electrical devices including devices that utilize touch screen display technologies and/or mouse-and-keyboard type interfaces. Examples of such devices include computers (desktop and mobile), smart phone, personal digital assistants (PDAs), and other electronic devices both wired and wireless.

Various aspects are now described with reference to the drawings. In the following description, for purposes of explanation, numerous specific details are set forth in order to provide a thorough understanding of one or more aspects. It may be evident, however, that the various aspects may be practiced without these specific details. In other instances, well-known structures and devices are shown in block diagram form in order to facilitate describing these aspects.

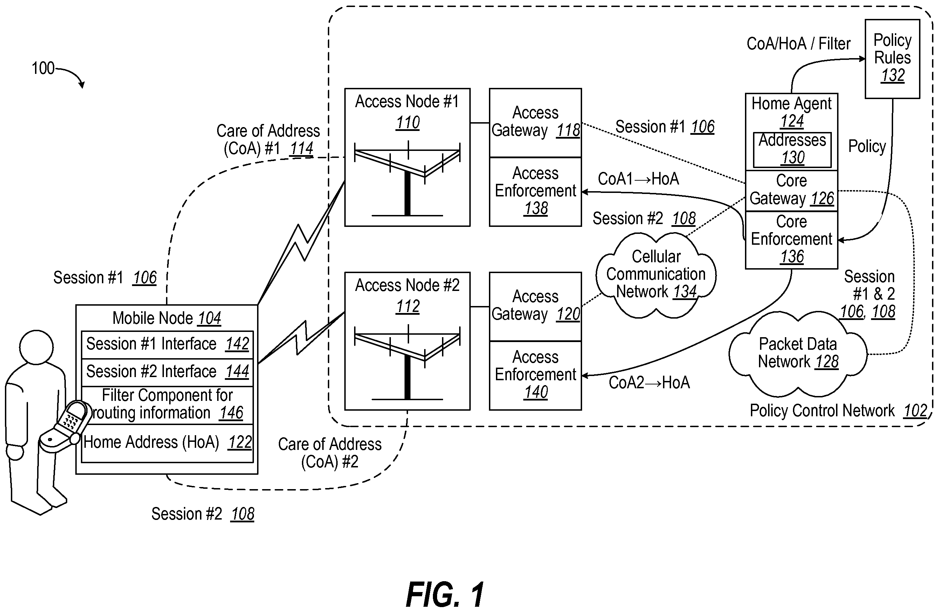

Referring initially to **FIG. 1**, a wireless communication system **100** comprises policy control network **102** that supports the mobility for a mobile node **104,** also referred to as user equipment (UE) or access terminal, to establish subsequent or simultaneous data packet sessions #1, #2 **106, 108,** such as but not limited to Mobile Internet Protocol (IP), with a plurality of access nodes #1, #2 (e.g., base station), **110, 112.** The mobile node **104** establishes each session **106, 108** by obtaining a respective care-of-address (CoA) **114**, **116** from a perspective access gateway **118, 120.** The mobile node **104** has a home address (HoA) **122** that facilitates accessing associated services while moving between access gateways To that end, a home agent (HA) **124** at a core gateway **126** contains information about the HoA **122** that can be necessary for example to access certain services available from a packet data network (PDN) **128.** first and second access gateways **118, 120** for each access node **110, 112** respectively can communicate with the core gateway **126** in order to establish each session **106, 108;** the home agent (HA) **124** maintains an association **130** of the HoA **122** with these CoA's **114, 116.**

A policy rules function **132,** which can be part of a cellular communication network **134,** has a need to distribute rules for purposed such as Quality of Service (QoS), charging, etc., for these sessions **166, 108.** By having the home agent (HA) **124** and core policy enforcement function (C-PCEF) 136 communicate these associated HoA **122** and CoA's **114, 116** to the policy rules function **130,** policy rules can be appropriately disseminated to a respective access policy enforcement function **138, 140** at the access gateways **118, 120.**

Alternatively or in addiction, in one aspect the mobile node **104** can represent a stationary or mobile device taking advantage of differing capabilities of the two access nodes #1, #2 **110, 112,** such as what flows are routed through which node, depicted as a session #1 interface **142** and session #2 interface **144.** A filter component captures routing information for different IP flows through different accesses **146**. For instance, one node **110** can be capable of high-bandwidth subscriber services (e.g., streaming multimedia content) whereas the other node **112** is capable of a non-subscriber, low bandwidth IP messaging service. The home agent (HA) **124** advantageously can obtain information regarding this different routing of flows and communicates it to the policy rules function **132** so that policy rules are appropriate for the respective sessions **106**, **108**.

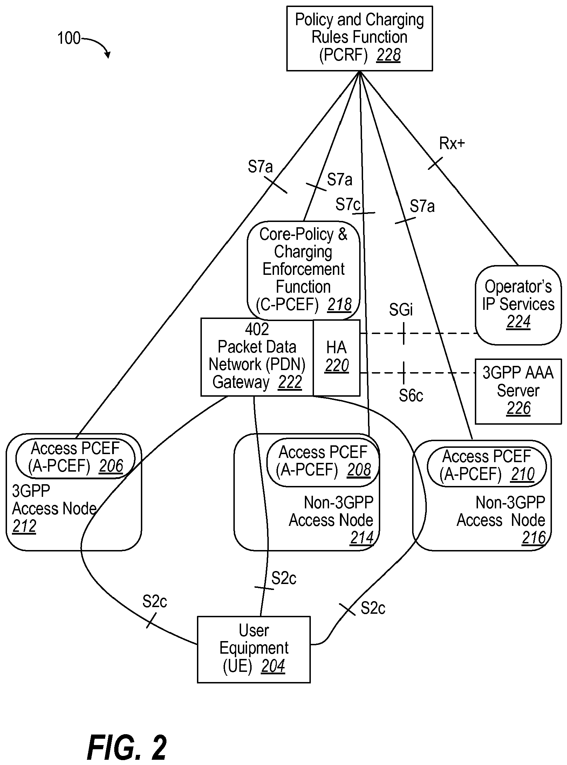

In **FIG. 2**, a policy charging control (PCC) architecture **200** of a wireless communication system **202** is enhaned for mobile communications between with user equipment (UE) **204** that entail a plurality of IP addresses (e.g., CoA's, HoA). In particular, two different policy and charging enforcement functions (PCEFs) are provided, specifically Access PCEFs **206, 208, 210,** which are located respectively at a 3GPP access gateway (GW) **212** and two Non-3GPP access nodes **214**, **216**, and a core PCEF **218** located at a home agent (HA) **220** at a 402 packet data network (PDN) gateway ("core" GW) **222**. The PDN GW **222** and HA **220** are interfaced to operator's IP services **224** and 3GPP (AAA) server **226** via SGi interface and S6c interface, respectively. The UE **204** forms an S2c interface respectively via each access node **212**, **214, 216** with the 402 PDN GW **222.** A policy and charging rules function (PCRF) **228** communicates via respective S7a interfaces with A-PDEFs **212, 214, 216** and via an S7c interface with the C-PDEF **218**. The interfaces S7a and S7c can deflect differences advantageous for slitting the functionality of PCEF into core and access PCEFs.

It should be appreciated that wireless communication systems arc widely deployed to provide various types of communication content such as voice, data, and so on. These systems may be multiple-access systems capable of supporting communication with multiple users by sharing the available system resources (e.g., bandwidth and transmit power). Examples of such multiple-access systems include code division multiple access (CDMA) systems, time division multiple access (TDMA) systems, frequency division multiple access (FDMA) systems, 3GPP LTE systems, and orthogonal frequency division multiple access (OFDMA) systems.

Generally, a wireless multiple-access communication system can simultaneously support communication for multiple wireless terminals. Each terminal communicates with one or more base stations via transmissions on the forward and reverse links. The forward link (or downlink) refers to the communication link from the base stations to the terminals, and the reverse link (for uplink) refers to the communication link from the terminals to the base stations. This communication link may be established via a single-in-single-out, multiple-in-signal-out or a multiple-in-multiple-out (MIMO) system.

A MIMO system employs multiple (*N_{T}*) transmit antennas and multiple (*N_{R}*) receive antennas for data transmission. A MIMO channel formed by the *N_{T}* transmit and *N_{R}* receive antennas may be decomposed into *N_{S}* independent channels, which are also referred to as spatial channels, where *N_{S}* ≤ min{*N_{T}*, *N_{R}*}. Each of the *N_{S}* independent channels corresponds to a dimension. The MIMO system can provide improved performance (e.g., higher throughput and/or greater reliability) if the additional dimensionalities created by the multiple transmit and receive antennas are utilized.

A MIME system supports a time division duplex (TDD) and frequency division duplex (FDD) systems. In a TDD system, the forward and revise link transmissions ate on the same frequency region so that the reciprocity principle allows the estimation of the forward link channel from the reverse link channel. This enables the access point to extract transmit beamforming gain on the forward link when multiple antennas are available at the access point.

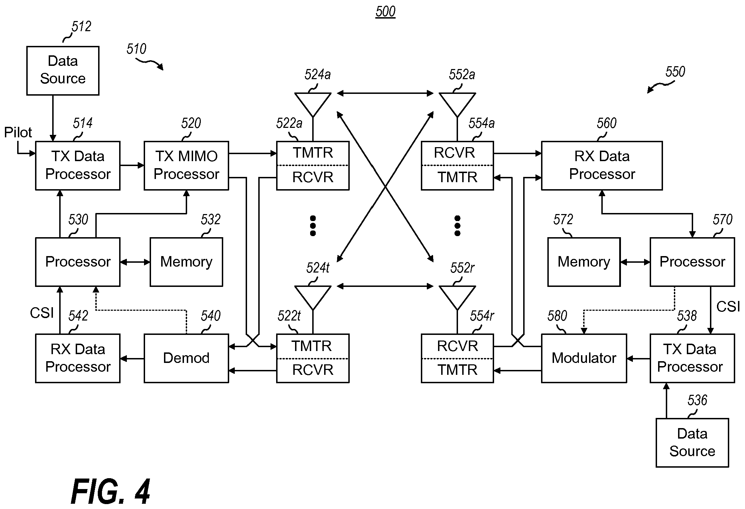

Referring to **FIG. 4****,** a multiple access wireless communication system according to one aspect is illustrated. An access point **450** (AP) includes multiple antenna groups, one including **454** and **456**, another including **458** and **460**, and an additional including **462** and **464**. In **FIG. 4****,** only two antennas are shown for each antenna group, however, more or fewer antennas may be utilized for each antenna group. Access terminal (AT) **466** is in communication with antennas **462** and **464,** where antennas **462** and **464** transmit information to access terminal **466** over forward link **470** and receives information from access terminal **466** over reverse link **468**. Access terminal **472** is in communication with antennas **456** and **458**, where antennas **456** and **458** transmit information to access terminal **472** over forward link **476** and receive information from access terminal **472** over reverse link **474.** In a FDD system, communication links **468**, **470, 474** and **476** may use different frequency for communication. For example, forward link **470** may use a different frequency then that used by reverse link **468.** Each group of antennas and/or the area in which they are designed to communicate is often referred to as a sector of the access point **450**. In the aspect, antenna groups each are designer to communicate to access terminals **466,472** in a sector of the areas covered by access point **450**.

In communication over forward links **470** and **476,** the transmitting antennas of access point **450** utilize beamforming in order to improve the signal-to-noise ratio of forward links for the different access terminals **466** and **474**. Also, an access point using beamforming to transmit to access terminals scattered randomly through is coverage causes less interference to access terminals in neighboring cells than an access point transmitting through a single antenna to all its access terminals,

An access point **450** may be a fixed station used for communicating with the terminals and may also be referred to as an access point, a Node B, or some other terminology. An access terminal **466, 472** may also be called user equipment (UE), a wireless communication device, terminal, access terminal or some other terminology.

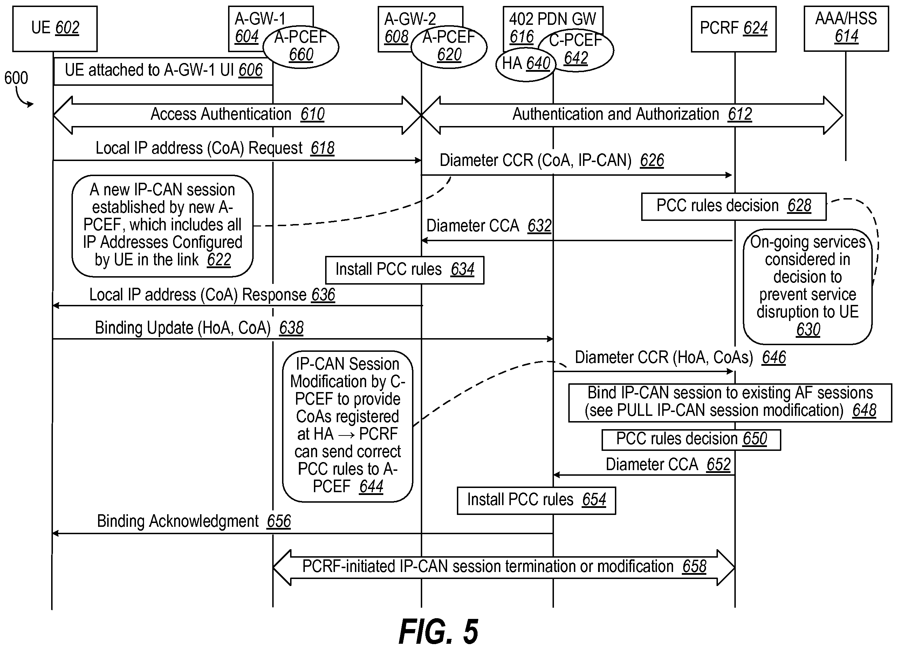

**FIG. 5** is a block diagram of an aspect of a transmitter system **510** (also known as the access point) and a receiver system **550** (also known as access terminal) in a MIMO system **500**. At the transmitter system **510**, traffic data for a number of data streams is provided from a data source **512** to a transmit (TX) data processor **514**.

In an aspect, each data stream is transmitted over a respective transmit antenna, TX data processor **514** formats, codes, and interleaves the traffic data for each data stream based on a particular coding scheme selected for that data stream to provide coded dara.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QSPK, M-PSK, or M-QAM) selected for that data stream to provide modulation symbols. The data rate, coding, and modulation for each data stream may be determined by instructions performed by processor **530**.

The modulation symbols for all data streams are then provided to a TX MIMO processor **520**, which may further process the modulation symbols (e,g., for OFDM). TX MIMO processor **520** then provides *N_{T}* modulation symbol streams to *N_{T}* transmitters (TMTR) **522a** through **522t.** In certain implementations, TX MIMO processor **520** applies beamforming weights to the symbols of the data streams and to the antenna from which the symbol is being transmitted.

Beach transmitter **522** receives and processes a respective symbol stream to provide one or more analog signals, and further condition (e.g., amplifies, filters, and upconverts) the analog signals to provide a modulated signal suitable for transmission over the MIMO channel. *N_{T}* modulated signals from transmitters **522a** through **522t** are then transmitted from *N_{T}* antennas **524a** through **524t**. respectively.

At receiver system **550**, the transmitted modulated signals are received by *N_{R}* antennas **552a** through **552r** and the received signal from each antenna **552** is provided to a respective receiver (RCVR) **554a** though **554r**. Each receiver **554** conditions (e.g., filters, amplifies, and downconverts) a respective received signal, digitizes the conditioned signal to provide samples, and further processes the samples to provide a cormponding "recived" symbol stream.

An RX data processor **560** then receives and processes the *N_{R}* received symbol streams from *N_{R}* receivers **554** based on a particular receiver processing technique to provide *N_{T}* "detected" symbol streams. The RX data processor **560** then demodulates, deinterleaves, and decodes each detected symbol stream to recover the traffic data for the data stream. The processing by RX data processor **560** is complomentary to that performed by TX MIMO processor **520** and TX data processor **514** at transmitter system **510.**

A processor **570** periodically determines which pre-coding matrix to use (discussed below). Processor **570** formulates a reverse link message comprising a matrix index portion and a rank value portion.

The reverse link message may comprise various types of information regarding the communication link and/or the received data stream. The reverse link. message is then processed by a TX data processor **538**, which also receives traffic data for a number of data streams from a data source **536,** modulated by a modulator **580**, conditioned by transmitters **554a** through **554r**, and transmitted back to transmitter system **510**.

At transmitter system **510**, the modulated signals from receiver system **550** are receded by antennas **524,** conditioned by receivers **522**, demodulated by a demodulator **540**, and processed by a RX data processor **542** to extract the reserve link message transmitted by the receiver system **550.** Processor **530** then determines which pre-coding matrix to use for determining the beamforming weights then processed the extracted message.

In an aspect, logical channels are classified into Control Channels and Traffic Channels. Logical Control Channels comprises Broadcast Control Channel (BCCH), which is DL channel for broadeasting system control information. Paging Control Channel (PCCH), which is DL channel that transfers paging information. Multicast Control Channel (MCCH) which is Point-to-multipoint DL channel used for transmitting Multimedia Broadcast and Multicast Service (MBMS) scheduling and control information for one or several MTCHs. Generally, after establishing RRC connection this channel is only used by UEs that receive MBMS (Note: old MCCH+MSCH). Dedicated Control Channel (DCCH) is Point-to-point bi-directional channel that transmits dedicated control information and used by UEs having an RRC connection. In aspect, Logical Traffic Channels comprises a Dedicated Traffic Channel (DTCH), which is Point-to-point bi-directional channel, dedicated to one UE, for the transfer of user information. In addition, a Multicast Traffic Channel (MTCH) for Point-to-mwtipoint DL channel for transmitting traffic data.

In an aspect, Transport Channels are classified into DL and UL. DL Transport Channels comprises a Broadcast Channel (BCH), Downlink Shared Data Channel (DL-SDCH) and a Paging Channel (PCH), the PCH for support of UE power saving (DRX cycle is indicated by the network to the UE), broadcasted over entire call and mapped to PHY resources which can be used for other control/traffic channels. The UL Transport Channels comprises a Random Access Channel (RACH), a Request Channel (REQCH), an Uplink Shared Data Channel (UL-SDCH) and plurality of PHY channels. The PHY channels comprise a set of DL channels and UL channels.

The DL PHY channels comprises: Common Pilot Channel (CPICH); Synchronization Channel (SCH); Common Control Channel (CCCH); Shared DL Control Channel (SDCCH); Multicast Control Channel (MCCH); Shared UL Assignment Channel (SUACH); Acknowledgement Channel (ACKCH); DL Physical Shared Data Channel (DL-PSDCH); UL Power Control Channel (UPCCH); Paging Indicate Channel (PICH); Load Indicator Channel (UCH); The UL PHY Channels comprises: Physical Random Access Channel (PRACH); Channel Quality Indicator Channel (CQICH); Acknowledgement Channel (ACKCH); Antenna Subset Indicator Channel (ASICH); Shared Request Channel (SREQCH): UL Physical Shared Data Channel (UL-PSDCH); Broadband Pilot Channel (BPICH).

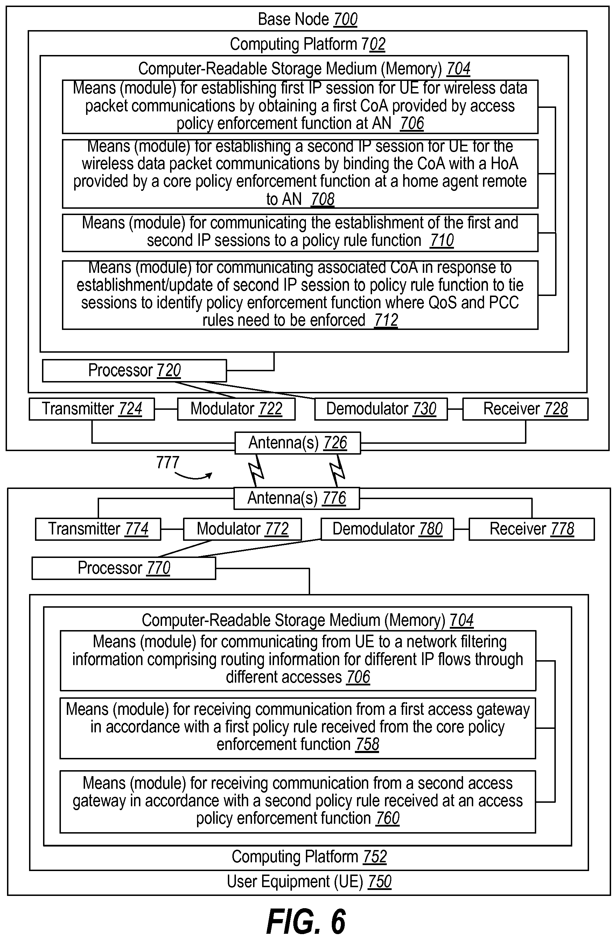

In **FIG. 6****,** a methodology **600** is depicted for an S2c handover and flow descriptor to provide for PCC rule provisioning for multiple mobile IP sessions. A UE **602** is attached to an access gateways #1 (A-GW-1) **604** (block **606**). The UE **602** performs access authentication to an access gateway #2 (A-GW-2) **608** as depicted at **610**, which in turn completes forming a secure attachment by performing authenticafion and authorization (block **612**) with Authentication, Authorization, and Accounting (AAA)/Home Subscriber Server (HSS) **614** via a 402 packet data network (PDN) gateway **616**, also referred to as "core PDN GW". The UE **602** is then able to request a local IP address (CoA) from the A-GW-2 **608**, depicted at **618**. A new IP-CAN (Internet Protocol Connectivity Access Network) session is established (instantiated) by a new accen-PCEF **620** at the A-GW-2 **608**. by including all IP addresses configured by the UE **602** in the link (block **612**).

In an illustrative aspect, this is provided by the A-PCEF **620** sending an Internet Engineering Task Force (IETF) Diameter (RFC 3588) Credit Control Request (CCR) message to a PCRF **624**, linking a CoA with the IP-CAN session, depicted a TX **626.** The PCRF **624** responds by making a rules decision (block **628**). As depicted in block **630**, the PCEF **624** can advantageously consider as an input what services are ongoing in deciding on PCC rules so that service disruption is not experienced by the UE **602**. The PCRF **624** provisions the A-GW-2 **608** by sending a Diameter credit control answer (CCA) as depicted a TX **632.** The A-PCEF **620** at the A-GW-2 **608** installs the PCC rules (block **634**). The A-GW-2 **608** transmits a local IP address (CoA) response to the UE, **602** as depicted at **636.** The UE **602** provides a binding update (BU) to the 420 PDN GW **616** that includes the Home Address (HoA) for the UE **602** as well as the new CoA as depicted a TX **638**.

A Home Agent (HA) **640** at the 402 PDN CW **616** keeps track of these associations between HoA and CoA. A core PCEF (C-PCEP) **642** also at the PDN GW **616** performs an IP-CAN session modification is order to provide the PCRF **624** with the CoAs registered at the HA **640** so that the correct PCC rules can be sent to the A-PCEF **620** (block **644**). To that end, the 402 PDN GW **616** sends a Diameter CCR that includes HoA and CoAs to the PCRF **624** as depicted art **646**. The PCRF **624** binds the IP-CAN session to existing Application Functions (AF) sessions, such as by PULL IP-CAN session modification (block **648**). The PCRF **624** makes a PCC rules decision (block **650**) and responds with a Diameter CCA, depicted at **652**. The 402 PDN GW (Core GW) **616** installs the PCC rules (block **654**) and sends a blinding acknowledgement to the UE **602**, as depicted at **656**. PCRF-initiated IP-CAN session termination or modification is made as appropriate as depicted at **658** between the PCEF **624** and an A-PCEF **660** at the A-GW-1 **604**.

In **FIG**. **7,** evolved base node (eNB) **700** has a computing platform **702** that provides means such as sets of codes for causing a computer to conduct multiple wireless IP sessions for client-based mobility within a PCC architecture, in particular, the computing platform **702** supports such sessions having multiple care of addresses (CoA) that need to be associated with a home address (HoA) of the UE **700** for Policy and Charging Control (PCC) purposes. In particular, the computing platform **702** includes a computer readable storage medium (e.g., memory) **704** that stores a plurality of modules **706-712** executed by a processor(s) **720**. A modulator **722** controlled by the processor **720** prepares a downlink signal for modulation by a transmitter **724**, radiated by antenna(s) **726.** A receiver **728** receives uplink signals from the antenna(s) **726** that are demodulated by a demodulator **728** and provided to the processor **720** for decoding. In particular, a means (e.g, module, set of codes) **706** is provided for establishing a first Internet Protocol (IP) session for user equipment (UE) for wireless data packet communications by obtaining an IP address provided by an access policy enforcement function at an access node. A means (e.g., module, set of codes) **708** is provided for instantiating a second IP session for UE for the wireless data packet communications by binding the IP address of the first session with a home address (HoA) provided by a core policy enforcement function remote to the access node. A means (e.g., module, set of codes) **710** is provided for communicating the establishment of the first and second IP sessions to a policy rule function. A means (e.g., module, set of codes) **712** is provided for communicating the associated IP Address of the first session in response to instantiation of the second IP session to the policy rule function. The first and second sessions are tied to identify the policy enforcement function where the policy rules need to be enforced. In one aspect, the two sessions are tied to identify the policy enforcement function where the Quality of Service (QoS) and Policy Charging Control (PCC) rules need to be enforced.

With continued reference to **FIG.** 7, user equipment. (UE) **750** has a computing platform **752** that provides means such as sets of codes for causing a computer to request, multiple wireless IP sessions for client-based mobility within a PCC architecture. In particular, the computing platform **752** supports such sessions having multiple care of addresses (CoA) that need to be associated with a home address (HoA) of the UE **750** for Policy and Charging Control (PCC) purposes. In particular, the computing platform **752** includes a computer readable storage medium (e.g., memory) **754** that stores a plurality of modules **756-760** executed by a processor(s) **770.** A modulator **772** controlled by the processor **770** prepares an uplink signal for modulation by a transmitter **774,** radiated by antenna(s) **776** as depicted at **777** to the eNB **700.** A receiver **778** receives downlink signals from the eNB **700** from the antenna(s) **776** that are demodulated by a demodulator **778** and provided to the processor **770** for decoding. In particular, a means (e.g., module, set of codes) **756** is for communicating from user equipment to a network filtering information comprising routing information for different Internet Protocol (IP) flows through different accesses. Means (e.g., module, set of codes) **758** are provided for receiving communication from a first access gateway in accordance with a first policy rule received from the core policy enforcement function. Means (e.g., module, set of codes) **760** are provided for receiving communication from a second access gateway in accordance with a second policy rule received at an access policy enforcement function, wherein the network communicates the filtering information by a core policy enforcement function to a policy rules function together with a home address (HoA) and at least one care of address (CoA), and establishes resources by the policy rules function based on the routing information and provided CoA.

What has been described above includes examples of the various aspects. It is, of course, not possible to describe every conceivable combination of components or methodologies for purposes of describing the various aspects, but one of ordinary skill in the art may recognize that many further combinations and permutations are possible.

In particular and in regard to the various functions performed by the above described components, devices, circuits, systems and the like, the terms (including a reference to a "means") used to describe such components are intended to correspond, unless otherwise indicated, to any component which performs the specified function of the described component (*e.g*., a functional equivalent), even though not structurally equivalent to the disclosed structure, which performs the function in the herein illustrated exemplary aspects. In this regard, it will also be recognized that the various aspects include a system as well as a computer-readable medium having computer-executable instructions for performing the acts and/or events of the various methods.

In addition, while a particular feature may have been disclosed with respect to only one of several implementations, such feature may be combined with one or more other features of the other implementations as may be desired and advantageous for any given or particular application. To the extent that the terms "includes," and "including" and variants thereof are used in either the detailed description or the claims, these terms are intended to be inclusive in a manner similar to the term "comprising." Furthermore, the term "or" as used in either the detailed description of the claims is meant to be a "non-exclusive or".

Furthermore, as will be appreciated, various portions of the disclosed systems and methods may include of consist of artificial intelligence, machine learning, or knowledge or rule based components, sub-components, processes, means, methodologies, or mechanisms (e.g., support vector machines, neural networks, expert systems, Bayesian belief networks, fuzzy logic, data fusion engines, classifiers...). Such components, inter alia, can automate certain mechanisms or processes performed thereby to make portions of the systems and methods more adaptive as well as efficient and intelligent By way of example and not limitation, the evolved RAN (e.g, access point, eNode B) can infer or predict when a robust or augmented check field has been employed.

In view of the exemplary systems described supra, methodologies that may be implemented in accordance with the disclosed subject matter have been described with reference to several flow diagrams. While for purposes of simplicity of explanation, the methodologies are shown and described as a series of blocks, it is to be understood and appreciated that the claimed subject matter is not limited by the ***order*** of the blocks, as some blocks may occur in different orders and/or concurrently with other blocks from what is depicted and described herein. Moreover, not all illustrated blocks may be required to implement the methodologies described herein. Additionally, it should be further appreciated that the methodologies disclosed herein are capable of being stored on an article of manufacture to facilitate transporting and transferring such methodologies to computers. The term article of manufacture, as used herein, is intended to encompass a computer program accessible from any computer-readable device, carrier, or media,

It should be appreciated that any patent, publication, or other disclosure material, in whole or in part, that is said to be incorporated by reference herein is incorporated herein only to the extent that the incorporated material does not conflict with existing definitions, statements, or other disclosure material set forth in this disclosure. As such, and to the extent necessary, the disclosure as explicitly set forth herein supersedes any conflicting material incorporated herein by reference. Any material or portion thereof, that is said to be incorporated by reference herein, but which conflicts with existing definitions, statements, or other disclosure material set forth herein, will only be incorporated to the extent that not conflict arises between that incorporated material and the existing disclosure, material.

## Claims

1. A method for provisioning policy rules for multiple data packet sessions over a wireless communication network (100) to a user equipment, UE, (104, 750), comprising:
establishing a first Internet Protocol, IP, session (106) via a first access gateway (118) for the UE (104, 750) for wireless data packet communications by obtaining an IP address provided by an access policy enforcement function (138) at an access node, wherein the first IP session is established between the UE and the access node;
instantiating a second IP session (108) for the UE (104, 750) for the wireless data packet communications by binding the IP address of the first session (106) with a home address, HoA, provided by a core policy enforcement function (110) wherein the core policy enforcement function is provided remote to the access node and wherein the second IP session is established between the UE and a packet data network gateway;
communicating the establishment of the first (106) and second IP sessions (108) to a policy rule function (132) provided in a cellular communication network;
communicating an associated IP address of the first session (106) in response to instantiation of the second IP session (108) to the policy rule function (132); and
tying the first (106) and the second (108) IP sessions in a binding update to the packet data network gateway to identify the policy enforcement function (138, 140) where the policy rules need to be enforced.

2. The method of claim 1, further comprising:
receiving a binding update, BU, from the UE (104, 750) at a Home Agent; and
communicating the establishment of a first IP session (106) and the instantiation of a second IP session (108) and the HoA associated with the IP address of the first IP session (106) to the policy rule function (132) by sending a credit control request, CCR, with a registered IP addresses.

3. The method of claim 1, further comprising:
determining at the policy rule function (132) that a prior session with a second access gateway (120) existed for the UE (104, 750); and
modifying the prior session through a policy rule function-initiated communication to a second access policy enforcement function (140) at the second access gateway (120).

4. The method of claim 3, further comprising modifying the prior session by terminating the prior session.

5. The method of claim 1, further comprising:
communicating from the user equipment (104, 750) to the policy rules function (132) filtering information; and
determining policy rules that reflect the filtering information.

6. A computer readable medium embodying machine executable instructions for causing at least one computer to perform a method according to one of the claims 1 to 5 when executed.

7. A system (700) for provisioning policy rules for multiple data packet sessions over a wireless communication network (100) to a user equipment, UE, (104, 750), comprising:
means (706) for establishing a first Internet Protocol, IP, session (106) via a first access gateway (118) for the UE (104, 750) for wireless data packet communications by obtaining an IP address provided by an access policy enforcement function (138) at an access node, wherein the first IP session is established between the UE and the access node;
means (708) for establishing a second IP session (108) for UE (104, 750) for the wireless data packet communications by binding the IP address of the first session (106) with a home address, HoA, provided by a core policy enforcement function wherein the core policy enforcement function is provided remote to the access node and wherein the second IP session is established between the UE and a packet data network gateway;
means (710) for communicating the establishment of the first (106) and second (108) IP sessions to a policy rule function provided in a cellular communication network;
means (712) for communicating the associated IP Address of the first (106) session in response to establishment or update of the second (108) IP session to the policy rule function;
means for tying the first (106) and second (108) IP sessions in a binding update to the packet data network gateway to identify the policy enforcement function where the policy rules need to be enforced (138, 140).

8. The system of claim 7, further comprising:
means for receiving a binding update, BU, from the UE (104, 750) at a Home Agent; and
means for communicating the establishment of a first IP session (106) and the instantiation of a second IP session (108) and HoA associated with the IP address of the first IP session (106) to the policy rule function (132) by sending a credit control request, CCR, with a registered IP addresses.

9. The system of claim 7, further comprising:
means for determining at the policy rule function that a prior session with a second access gateway (120) existed for the UE (104, 750); and
means for modifying the prior session through a policy rule function-initiated communication to a second access policy enforcement function (140) at the second access gateway (120).

10. The system of claim 9, further comprising modifying the prior session by terminating the prior session.

11. The system of claim 7, further comprising:
means for communicating from the user equipment (104, 750) to the policy rules function (132) filtering information; and
means for determining policy rules that reflect the filtering information.

12. The system according to claim 7, further comprising:
an access policy function at an access node for establishing the first Internet Protocol, IP, session (106);
a core policy enforcement function remote to the access node for establishing the second IP session (108); and
a policy rule function for receiving the communication comprising the establishment of the first (106) and second (108) IP sessions.

## Patentansprüche

1. Verfahren zum Bereitstellen von Richtlinienregeln für mehrere Datenpaketsitzungen über ein drahtloses Kommunikationsnetzwerk (100) an ein user equipment, UE, (104, 750), aufweisend:
Einrichten einer ersten Internetprotokoll, IP, Sitzung (106) über ein erstes Zugangsgateway (118) für das UE (104, 750) für drahtlose Datenpaketkommunikationen durch Erlangen einer IP-Adresse, welche bereitgestellt wird, durch eine Zugangsrichtliniendurchsetzungsfunktion (138) bei einem Zugriffsknoten, wobei die erste IP-Sitzung eingerichtet wird zwischen dem UE und dem Zugangsknoten;
Instanziieren einer zweiten IP-Sitzung (108) für das UE (104, 705) für die drahtlosen Datenpaketkommunikationen durch Binden der IP-Adresse der ersten Sitzung (106) mit einer Heimadresse, HoA, bereitgestellt durch eine Kernrichtliniendurchsetzungsfunktion (110), wobei die Kernrichtliniendurchsetzungsfunktion entfernt bereitgestellt wird an den Zugangsknoten und wobei die zweite IP-Sitzung eingerichtet wird zwischen dem UE und einem Paketdatennetzwerkgateway;
Kommunizieren der Einrichtung der ersten (106) und zweiten IP-Sitzungen (108) an eine Richtlinienregelfunktion (132), welche in einem zellulären Kommunikationsnetzwerk bereitgestellt wird;
Kommunizieren einer assoziierten IP-Adresse der ersten Sitzung (106) in Antwort auf Instanziierung der zweiten IP-Sitzung (108) an die Richtlinienregelfunktion (132); und
Anknüpfen der ersten (106) und der zweiten (108) IP-Sitzungen in einem Bindungsupdate an das Paketdatennetzwerkgateway, um die Richtliniendurchsetzungsfunktion (138, 140) zu identifizieren, bei der die Richtlinienregeln durchgesetzt werden müssen.

2. Verfahren nach Anspruch 1, weiterhin aufweisend:
Empfangen eines Bindungsupdates, BU, von dem UE (104, 750) bei einem Heimagenten; und
Kommunizieren der Einrichtung einer ersten IP-Sitzung (106) und der Instanziierung einer zweiten IP-Sitzung (108) und des HoA, assoziiert mit der IP-Adresse der ersten IP-Sitzung (106) an die Richtlinienregelfunktion (132) durch Senden einer Kreditsteuerungsanfrage, CCR, mit einer registrierten IP-Adresse.

3. Verfahren nach Anspruch 1, weiterhin aufweisend:
Bestimmen bei der Richtlinienregelfunktion (132), dass eine vorherige Sitzung mit einem zweiten Zugangsgateway (120) für das UE (104, 750) existiert; und
Modifizieren der vorherigen Sitzung durch eine Richtlinienregelfunktionsinitiierte Kommunikation an eine zweite Zugangsrichtliniendurchsetzungsfunktion (140) bei dem zweiten Zugangsgateway (120).

4. Verfahren nach Anspruch 3, weiterhin aufweisend Modifizieren der vorherigen Sitzung durch Beenden der vorherigen Sitzung.

5. Verfahren nach Anspruch 1, weiterhin aufweisend:
Kommunizieren von dem user equipment (104, 750) an die Richtlinienregelfunktion (132) von Filterinformation; und
Bestimmen von Richtlinienregeln, welche die Filterinformation wiedergeben.

6. Computerlesbares Medium verkörpernd maschinenausführbare Instruktionen zum Veranlassen wenigstens eines Computers zum Durchführen eines Verfahrens nach einem der Ansprüche 1-5, wenn sie ausgeführt werden.

7. System (700) zum Bereitstellen von Richtlinienregeln für mehrere Datenpaketsitzungen über ein drahtloses Kommunikationsnetzwerk (100) an ein user equipment, UE, (104, 750), aufweisend:
Mittel (706) zum Einrichten einer ersten Interprotokoll, IP, Sitzung (106) über ein erstes Zugangsgateway (118) für das UE (104, 750) für drahtlose Datenpaketkommunikationen durch Erhalten einer IP-Adresse, welche durch eine Zugangsrichtliniendurchsetzungsfunktion (138) bei einem Zugangsknoten bereitgestellt wird, wobei die erste IP-Sitzung eingerichtet wird zwischen dem UE und dem Zugangsknoten;
Mittel (708) zum Einrichten einer zweiten IP-Sitzung (108) für UE (104, 750) für drahtlose Datenpaketkommunikationen durch Binden der IP-Adresse der ersten Sitzung (106) mit einer Heimadresse, HoA, bereitgestellt durch eine Kernrichtliniendurchsetzungsfunktion, wobei die Kernrichtliniendurchsetzungsfunktion entfernt bereitgestellt wird an den Zugangsknoten und wobei die zweite IP-Sitzung eingerichtet ist zwischen dem UE und einem Paketdatennetzwerkgateway;
Mittel (710) zum Kommunizieren der Einrichtung der ersten (106) und zweiten (108) IP-Sitzungen an eine Richtlinienregelfunktion bereitgestellt in einem zellulären Kommunikationsnetzwerk;
Mittel (712) zum Kommunizieren der assoziierten IP-Adresse der ersten (106) Sitzung in Antwort auf Einrichtung oder Aktualisierung der zweiten (108) IP-Sitzung an die Richtlinienregelfunktion;
Mittel zum Anknüpfen der ersten (106) und zweiten (108) IP-Sitzungen in einem Bindungsupdate an das Paketdatennetzwerkgateway, um die Richtliniendurchsetzungsfunktion zu identifizieren bei welcher die Richtlinienregeln durchgesetzt werden müssen (138, 140).

8. System nach Anspruch 7, weiterhin aufweisend:
Mittel zum Empfangen eines Bindungsupdates, BU, von dem UE (104, 750) bei einem Heimagenten; und
Mittel zum Kommunizieren der Einrichtung von einer ersten IP-Sitzung (106) und der Instanziierung einer zweiten IP-Sitzung (108) und HoA assoziiert mit der IP-Adresse der ersten IP-Sitzung (106) an die Richtlinienregelfunktion (132) durch Senden einer Kreditsteuerungsanfrage, CCR, mit einer registrierten IP-Adresse.

9. System nach Anspruch 7, weiterhin aufweisend:
Mittel zum Bestimmen bei der Richtlinienregelfunktion, dass eine vorherige Sitzung mit einem zweiten Zugangsgateway (120) für das UE (104, 750) existierte; und
Mittel zum Modifizieren der vorherigen Sitzung durch eine Richtlinienregelfunktionsinitiierte Kommunikation an eine zweite Zugangsrichtliniendurchsetzungsfunktion (140) bei dem zweiten Zugangsgateway (120).

10. System nach Anspruch 9, weiterhin aufweisend Modifizieren der ersten Sitzung durch Beenden der vorherigen Sitzung.

11. System nach Anspruch 7, weiterhin aufweisend:
Mittel zum Kommunizieren von dem user equipment (104, 750) an die Richtlinienregelfunktion (132) von Filterinformation; und
Mittel zum Bestimmen von Richtlinienregeln, welche die Filterinformation wiedergeben.

12. System nach Anspruch 7, weiterhin aufweisend:
Eine Zugangsrichtlinienfunktion bei einem Zugangsknoten zum Einrichten der ersten Internetprotokoll, IP, Sitzung (106);
Kernrichtliniendurchsetzungsfunktion entfernt zu dem Zugangsknoten zum Einrichten der zweiten IP-Sitzung (108); und
Eine Richtlinienregelfunktion zum Empfangen der Kommunikation aufweisend die Einrichtung der ersten (106) und zweiten (108) IP-Sitzungen.

## Revendications

1. Procédé pour fournir des règles de politique pour de multiples sessions à paquets de données sur un réseau de communication sans fil (100) à un équipement utilisateur, UE, (104, 750), comprenant :
l'établissement d'une première session en protocole Internet, IP, (106) par l'intermédiaire d'une première passerelle d'accès (118) pour l'UE (104, 750) pour des communications sans fil à paquets de données en obtenant une adresse IP fournie par une fonction d'application de politique d'accès (138) à un noeud d'accès, dans lequel la première session IP est établie entre l'UE et le noeud d'accès ;
l'instanciation d'une seconde session IP (108) pour l'UE (104, 750) pour les communications sans fil à paquets de données en liant l'adresse IP de la première session (106) à une adresse d'accueil, HoA, fournie par une fonction d'application de politique d'infrastructure (110) dans lequel la fonction d'application de politique d'infrastructure est prévue de façon éloignée du noeud d'accès et dans lequel la seconde session IP est établie entre l'UE et une passerelle de réseau à données par paquets ;
la communication de l'établissement des première (106) et seconde (108) sessions IP à une fonction de règles de politique (132) prévue dans un réseau de communication cellulaire ;
la communication d'une adresse IP associée de la première session (106) en réponse à l'instanciation de la seconde session IP (108) à la fonction de règles de politique (132) ; et
le rattachement des première (106) et seconde (108) sessions IP dans une mise à jour de liaison à la passerelle de réseau à données par paquets pour identifier la fonction d'application de politique (138, 140) où les règles de politique doivent être appliquées.

2. Procédé selon la revendication 1, comprenant en outre :
la réception d'une mise à jour de liaison, BU, à partir de l'UE (104, 750) à un agent d'accueil ; et
la communication de l'établissement d'une première session IP (106) et de l'instanciation d'une seconde session IP (108) et de la HoA associée à l'adresse IP de la première session IP (106) à la fonction de règles de politique (132) en envoyant une demande de contrôle de crédit, CCR, avec une adresse IP enregistrée.

3. Procédé selon la revendication 1, comprenant en outre :
la détermination au niveau de la fonction de règles de politique (132) qu'une session antérieure avec une seconde passerelle d'accès (120) existait pour l'UE (104, 750) ; et
la modification de la session antérieure, par l'intermédiaire d'une communication initiée par fonction, de règles de politique à une seconde fonction d'application de politique d'accès (140) au niveau de la seconde passerelle d'accès (120).

4. Procédé selon la revendication 3, comprenant en outre la modification de la session antérieure en terminant la session antérieure.

5. Procédé selon la revendication 1, comprenant en outre :
la communication, de l'équipement utilisateur (104, 750) à la fonction de règles de politique (132), d'informations de filtrage ; et
la détermination de règles de politique qui reflètent les informations de filtrage.

6. Support lisible par ordinateur comprenant des instructions exécutables par machine pour faire en sorte qu'au moins un ordinateur mette en oeuvre un procédé selon l'une des revendications 1 à 5 lorsqu'elles sont exécutées.

7. Système (700) pour fournir des règles de politique pour de multiples sessions à paquets de données sur un réseau de communication sans fil (100) à un équipement utilisateur, UE, (104, 750), comprenant :
des moyens (706) pour établir une première session en protocole Internet, IP, (106) par l'intermédiaire d'une première passerelle d'accès (118) pour l'UE (104, 750) pour des communications sans fil à paquets de données en obtenant une adresse IP fournie par une fonction d'application de politique d'accès (138) à un noeud d'accès, dans lequel la première session IP est établie entre l'UE et le noeud d'accès ;
des moyens (708) pour établir une seconde session IP (108) pour UE (104, 750) pour les communications sans fil à paquets de données en liant l'adresse IP de la première session (106) à une adresse d'accueil, HoA, fournie par une fonction d'application de politique d'infrastructure, dans lequel la fonction d'application de politique d'infrastructure est prévue de façon éloignée du noeud d'accès et dans lequel la seconde session IP est établie entre l'UE et une passerelle de réseau à données par paquets ;
des moyens (710) pour communiquer l'établissement des première (106) et seconde (108) sessions IP à une fonction de règles de politique prévue dans un réseau de communication cellulaire ;
des moyens (712) pour communiquer l'adresse IP associée de la première session (106) en réponse à l'établissement ou la mise à jour de la seconde session IP (108) à la fonction de règles de politique ;
des moyens pour rattacher les première (106) et seconde (108) sessions IP dans une mise à jour de liaison à la passerelle de réseau à données par paquets pour identifier la fonction d'application de politique où les règles de politique doivent être appliquées (138, 140).

8. Système selon la revendication 7, comprenant en outre :
des moyens pour recevoir une mise à jour de liaison, BU, à partir de l'UE (104, 750) à un agent d'accueil ; et
des moyens pour communiquer l'établissement d'une première session IP (108) et l'instanciation d'une seconde session IP (108) et de la HoA associée à l'adresse IP de la première session IP (106) à la fonction de règles de politique (132) en envoyant une demande de contrôle de crédit, CCR, avec une adresse IP enregistrée.

9. Système selon la revendication 7, comprenant en outre :
des moyens pour déterminer au niveau de la fonction de règles de politique qu'une session antérieure avec une seconde passerelle d'accès (120) existait pour l'UE (104, 750) ; et
des moyens pour modifier la session antérieure par l'intermédiaire d'une communication initiée par fonction de règles de politique à une seconde fonction d'application de politique d'accès (140) au niveau de la seconde passerelle d'accès (120).

10. Système selon la revendication 9, comprenant en outre la modification de la session antérieure en terminant la session antérieure.

11. Système selon la revendication 7, comprenant en outre :
des moyens pour communiquer, de l'équipement utilisateur (104, 750) à la fonction de règles de politique (132), des informations de filtrage ; et
des moyens pour déterminer des règles de politique qui reflètent les informations de filtrage.

12. Système selon la revendication 7, comprenant en outre :
une fonction de politique d'accès à un noeud d'accès pour établir la première session à protocole internet, IP, (106) ;
une fonction d'application de politique d'infrastructure éloignée du noeud d'accès pour établir la seconde session IP (108) ; et
une fonction de règles de politique pour recevoir la communication comprenant l'établissement des première (106) et seconde (108) sessions IP.
